# EUROPÄISCHE PATENTSCHRIFT

(11) **EP 4 397 427 B1**
(45) Veröffentlichungstag und Bekanntmachung des Hinweises auf die Patenterteilung: **04.06.2025**
(21) Anmeldenummer: 23217234.6
(22) Anmeldetag: 15.12.2023
(51) Int. Cl.: B23D 45/00, B25B 27/30, F16F 9/32, F16L 1/00, F16L 3/205

(54) **DEMONTAGE EINER ROHRHALTERUNG MIT FEDER**
DISASSEMBLY OF PIPE MOUNT WITH SPRING
DÉMONTAGE D'UN SUPPORT DE TUYAU AVEC RESSORT

(30) Priorität: 29.12.2022 DE 102022134977
(43) Veröffentlichungstag der Anmeldung: 10.07.2024
(73) Patentinhaber: RWE Nuclear GmbH, 45141 Essen (DE)
(72) Erfinder: Grzenkowski, Wilhelm, 66740 Saarlouis (DE); Landgraf, Thorsten, 68623 Lampertheim (DE); Rau, Markus, 64683 Einhausen (DE); Schmalz, Armin, 68623 Lampertheim (DE)
(74) Vertreter: Schwenderling, Jens

(56) Entgegenhaltungen:
- EP-A2- 0 513 524
- FR-A- 1 285 095
- US-A- 3 504 419
- US-A1- 2007 137 016

## Beschreibung

Die Erfindung betrifft ein Verfahren, gemäß dem Oberbegriff des Patentanspruchs 1, zur Demontage einer Rohrhalterung, insbesondere eines Federhängers oder einer Federstütze. Derartige Rohrhalterungen kommen beispielsweise in Kraftwerken zum Einsatz, insbesondere in Kernkraftwerken. Insbesondere betrifft die Erfindung den Rückbau oder die Instandsetzung eines Kraftwerks. Ebenso betrifft die Erfindung eine Anordnung zur Demontage einer Rohrhalterung gemäß dem Oberbegriff des Patentanspruchs 7.

Dokument US 3 504 419 A offenbart ein Verfahren gemäß dem Oberbegriff des Patentanspruchs 1 und eine Anordnung gemäß dem Oberbegriff des Patentanspruchs 7.

In Kraftwerken aber auch in der Industrie ist es bekannt, Rohrleitungen über sogenannte Federhänger oder Federstützen zu befestigen. Ein Federhänger dient der abgehängten Befestigung einer Rohrleitung beispielsweise unter einer Decke. Eine Federstütze dient der Befestigung einer Rohrleitung auf einem Boden. Als Oberbegriff für Federhänger oder Federstützen wird hierin der Begriff Rohrhalterung verwendet. Die Rohrhalterungen weisen eine Feder auf, über welche die Rohrleitung gehalten ist. Durch die Feder können Dehnungsverschiebungen ausgeglichen werden.

Es ist eine Vielzahl von Ausgestaltungen von Rohrhalterungen bekannt. Ein Federhänger ist beispielsweise aus der DE 23 20 002 A1 bekannt. Darin wird der Federhänger auch als Rohrhänger bezeichnet. Eine Federstütze ist beispielsweise aus der DE 10 2014 107 701 A1 bekannt. Allen diesen Rohrhalterungen ist gemein, dass diese ein Gehäuse aufweisen, in welchem eine vorgespannte Feder angeordnet ist. Aufgrund der Vorspannung stellt die Feder eine Gefahrenquelle dar. Soll eine Rohrhalterung am Ende ihrer Lebensdauer demontiert werden, kann die Feder unkontrolliert entspannen. Würde das Gehäuse ohne weitere Maßnahme geöffnet, würde die Feder schlagartig entspannen. Dadurch könnte die Feder mit großer Geschwindigkeit aus dem Gehäuse austreten. Die Feder selbst und/oder von ihr mitgerissene Gegenstände könnten dabei Menschen gefährden und/oder Gegenstände beschädigen. Entsprechendes gilt, wenn eine Rohrhalterung eingeschmolzen wird. Sobald das Gehäuse der Federkraft nicht mehr standhalten kann, kann die Feder unkontrolliert entspannen.

Aufgabe der vorliegenden Erfindung ist es, ausgehend vom beschriebenen Stand der Technik eine sichere Möglichkeit zur Demontage einer Rohrhalterung mit gespannter Feder zu schaffen.

Diese Aufgabe wird gelöst mit den Verfahren und der Anordnung gemäß den unabhängigen Ansprüchen. Weitere vorteilhafte Ausgestaltungen sind in den abhängigen Ansprüchen angegeben.

Erfindungsgemäß wird ein Verfahren zur Demontage einer Rohrhalterung, gemäß Patentanspruch 1, vorgestellt. Die Rohrhalterung weist ein Gehäuse auf, welches einen Mantel, eine an einer ersten Stirnseite des Gehäuses an dem Mantel befestigte erste Stirnplatte und eine an einer der ersten Stirnseite gegenüberliegenden zweiten Stirnseite des Gehäuses an dem Mantel befestigte zweite Stirnplatte umfasst, wobei innerhalb des Gehäuses eine Feder und ein axial beweglicher Federteller angeordnet sind, wobei die Feder einerseits an dem Federteller und andererseits an der zweiten Stirnplatte anliegt und dadurch derart gestaucht ist, dass die Feder eine Federkraft auf den Federteller in Richtung auf die erste Stirnplatte ausübt, wobei zwischen der ersten Stirnplatte und dem Federteller ein Anschlagselement angeordnet ist, welches die axiale Bewegung des Federtellers derart begrenzt, dass die Feder gestaucht ist, wenn der Federteller an dem Anschlagselement anliegt, und wobei das Verfahren die folgenden Schritte umfasst:
a) mit einer Krafterzeugungseinrichtung Ausüben einer Kraft auf den Federteller, welche der von der Feder erzeugten Federkraft entgegenwirkt,
b) Entfernen des Anschlagselements, während die mit der Krafterzeugungseinrichtung auf den Federteller erzeugte Kraft mindestens so groß ist wie die von der Feder erzeugte Federkraft,
c) Reduzieren der mit der Krafterzeugungseinrichtung auf den Federteller erzeugten Kraft auf einen Betrag unterhalb der von der Feder erzeugten Federkraft,
d) Öffnen des Gehäuses, und
e) Entnehmen der Feder und des Federtellers aus dem Gehäuse.

Das Verfahren dient der Demontage einer Rohrhalterung. Die Rohrhalterung kann beispielsweise am Ende ihrer Lebensdauer mit dem beschriebenen Verfahren demontiert werden. Anschließend können die Einzelteile der Rohrhalterung entsorgt oder recycelt werden. Alternativ kann die Rohrhalterung mit dem beschriebenen Verfahren demontiert und nach einer Instandsetzung wieder montiert werden.

Die Rohrhalterung kann insbesondere ein Federhänger oder eine Federstütze sein. Das Verfahren kann daher auch als ein "Verfahren zur Demontage eines Federhängers oder einer Federstütze" bezeichnet werden. Für das Verfahren kommt es nicht darauf an, ob die Rohrhalterung zuvor beispielsweise zur abgehängten Befestigung einer Rohrleitung von einer Decke oder zur Befestigung einer Rohrleitung über einem Boden verwendet wurde.

Rohrleitungen, welche über Rohrhalterungen der hier betrachteten Art gehalten sind, gibt es insbesondere in Kraftwerken. Das Verfahren kann daher insbesondere beim Rückbau oder bei der Instandsetzung eines Kraftwerks eingesetzt werden. Alternativ kann das Verfahren auch bei Industrieanlagen angewendet werden. Für das Verfahren ist es allerdings unerheblich, zu welchem Zweck die Rohrhalterung zuvor genutzt wurde. Die Rohrhalterung kann auch zum Zwecke der Demontage gemäß dem beschriebenen an einen anderen Ort transportiert werden. So kann das beschriebene Verfahren beispielsweise bei einem Entsorgungsunternehmen durchgeführt werden, zu welchem die Rohrhalterung für die Demontage gebracht werden.

Die Rohrhalterung umfasst ein Gehäuse. Das Gehäuse hat einen Mantel und zwei Stirnplatten. Eine erste der Stirnplatten ist an einer ersten Stirnseite des Gehäuses an dem Mantel befestigt. Das kann insbesondere durch eine Schweißverbindung oder durch eine Schraubverbindung der Fall sein. Eine zweite der Stirnplatten ist an einer der ersten Stirnseite gegenüberliegenden zweiten Stirnseite des Gehäuses an dem Mantel befestigt. Das kann insbesondere durch eine Schweißverbindung oder durch eine Schraubverbindung der Fall sein. Im einfachsten Fall ist das Gehäuse als ein Zylinder ausgebildet. Der Mantel ist in dem Fall ein Zylindermantel. Die erste Stirnplatte ist ein Deckel und die zweite Stirnplatte ist ein Boden, oder umgekehrt. Allerdings kommt es für das beschriebene Verfahren nicht darauf an, ob das Gehäuse einen kreisförmigen Querschnitt hat. Das Gehäuse kann daher auch eine von einem Zylinder abweichende Form haben.

Innerhalb des Gehäuses ist eine Feder angeordnet. Die Feder ist vorzugsweise derart angeordnet, dass eine Achse der Feder mit einer Achse des Gehäuses zusammenfällt. Ist das Gehäuse zylinderförmig, ist die Achse des Gehäuses die Zylinderachse. Ist das Gehäuse nicht zylinderförmig, gilt eine analoge Definition. Die erste Stirnplatte und die zweite Stirnplatte sind auf der Achse angeordnet und entlang der Achse voneinander beabstandet. Vorzugsweise steht die erste Stirnplatte senkrecht zur Achse und/oder steht die zweite Stirnplatte senkrecht zur Achse. Die Feder kann entlang der Achse gestaucht oder getreckt werden. Die von der Feder erzeugte Federkraft wirkt vorzugsweise entlang der Achse.

Innerhalb des Gehäuses ist weiterhin ein axial beweglicher Federteller angeordnet. Der Federteller ist insoweit axial beweglich, als dass der Federteller entlang der Achse des Gehäuses bewegt werden kann. Der Federteller ist vorzugsweise als eine Scheibe ausgebildet. Der Federteller ist vorzugsweise senkrecht zur Achse angeordnet. Der Federteller ist vorzugsweise senkrecht zur ersten Stirnplatte und/oder senkrecht zur zweiten Stirnplatte angeordnet.

Die Feder liegt einerseits an dem Federteller und andererseits an der zweiten Stirnplatte an. Es genügt, dass die Feder lose mit dem Federteller und mit der zweiten Stirnplatte in Kontakt steht. Es ist nicht erforderlich, aber möglich, dass ein erstes Ende der Feder fest mit dem Federteller verbunden ist. Es ist nicht erforderlich, aber möglich, dass ein zweites Ende der Feder fest mit der zweiten Stirnplatte verbunden ist.

Die Feder ist derart gestaucht, dass die Feder eine Federkraft auf den Federteller in Richtung auf die erste Stirnplatte ausübt. Konsequenterweise übt die Feder auch eine Federkraft auf die zweite Stirnplatte aus, welche von der ersten Stirnplatte weg gerichtet ist. Die Feder ist also zwischen dem Federteller und der zweiten Stirnplatte eingeklemmt. Insoweit ist die Feder vorgespannt. Das ist dadurch möglich, dass die Feder einerseits an der festen zweiten Stirnplatte anliegt. Andererseits impliziert die Vorspannung der Feder, dass der Federteller derart fest gehalten ist, dass die Feder den Federteller nicht in Richtung auf die erste Stirnplatte bewegen kann. Das kann dadurch der Fall sein, dass eine externe Kraft auf den Federteller in Richtung auf die zweite Stirnplatte einwirkt. Die von der Feder erzeugte Kraft ist keine solche externe Kraft. Im Betrieb kann die externe Kraft die Gewichtskraft einer Leitung sein. Allerdings ist die Feder auch dann vorgespannt, wenn keine externe Kraft auf den Federteller einwirkt. Das ist insbesondere im Auslieferungszustand der Rohrhalterung der Fall. Das ist möglich, weil zwischen der ersten Stirnplatte und dem Federteller das Anschlagselement vorgesehen ist, an welchem der Federteller anliegt, sofern keine externe Kraft auf den Federteller in Richtung auf die zweite Stirnplatte einwirkt.

Das Anschlagselement ist zwischen der ersten Stirnplatte und dem Federteller angeordnet. Es begrenzt die axiale Bewegung des Federtellers derart, dass die Feder gestaucht ist, wenn der Federteller an dem Anschlagselement anliegt. Das bedeutet, dass die Feder zumindest in diesem Fall gestaucht ist. Sofern der Federteller nicht an dem Anschlagselement anliegt, ist die Feder weiter gestaucht als wenn der Federteller an dem Anschlagselement anliegt. Der Federteller liegt auch dann nicht an der ersten Stirnplatte an, wenn keine externe Kraft auf den Federteller einwirkt.

Für die Funktionsweise des Verfahrens ist die Ausgestaltung des Anschlagselements unerheblich. Das Anschlagselement kann beispielsweise als eine Schraube ausgebildet sein, welche in einem Gewinde in der ersten Stirnplatte gehalten ist und den Federteller entlang der Achse des Gehäuses in einem Mindestabstand von der ersten Stirnplatte hält. Alternativ kann das Anschlagselement beispielsweise als ein Bolzen oder ein fester Vorsprung ausgebildet sein.

Die Feder ist also in jedem Fall gestaucht. Insoweit ist in der Feder Energie gespeichert, welche bei einer Demontage der Rohrhalterung unkontrolliert freigesetzt werden kann. Daher stellt die Feder eine Gefahrenquelle dar. Mit dem beschriebenen Verfahren kann die Rohrhalterung dennoch sicher demontiert werden. Der wesentliche Gedanke ist dabei, dass die Feder zunächst noch weiter gestaucht wird und erst dann kontrolliert entspannt wird, wenn das Anschlagselement entfernt worden ist. Anschließend kann das Gehäuse geöffnet und die Demontage vollendet werden. Dies erfolgt in den Schritten a) bis e) des Verfahrens.

In Schritt a) wird mit einer Krafterzeugungseinrichtung eine Kraft auf den Federteller ausgeübt, welche der von der Feder erzeugten Federkraft entgegenwirkt. Für die Funktionsweise des Verfahrens ist es unerheblich, welche Art von Krafterzeugungseinrichtung verwendet wird. Die Kraft kann beispielsweise hydraulisch, pneumatisch und/oder mechanisch erzeugt werden. Die mit der Krafterzeugungseinrichtung erzeugte Kraft wirkt der Federkraft entgegen. Auch ist es unerheblich, wie die Kraft von der Krafterzeugungseinrichtung auf den Federteller übertragen wird. Dies kann beispielsweise über eine Stange erfolgen, welche einerseits an der Krafterzeugungseinrichtung und andererseits an dem Federteller anliegt. Es ist unerheblich, ob die Stange als Teil der Krafterzeugungseinrichtung, als Teil der Rohrhalterung oder als eigenständiges Element angesehen wird. Die Krafterzeugungseinrichtung kann als eine Zug-und Drückeinrichtung ausgebildet sein. Je nach Art der Rohrhalterung kann jedoch auch eine reine Zug-einrichtung oder reine Drückeinrichtung verwendet werden.

Die Feder wird weiter gestaucht, sobald die mit der Krafterzeugungseinrichtung auf den Federteller erzeugte Kraft größer ist als die von der Feder erzeugte Federkraft. Da die von der Feder erzeugte Kraft wegabhängig ist, wird sich bei konstanter mit der Krafterzeugungseinrichtung auf den Federteller erzeugten Kraft ein Kräftegleichgewicht einstellen. Dass die Feder weiter gestaucht wird, erhöht das Gefahrenpotential und erscheint daher zunächst nicht zielführend zu sein. Dies wird aber durch die nachfolgenden Schritte kompensiert.

Sobald die mit der Krafterzeugungseinrichtung auf den Federteller erzeugte Kraft mindestens so groß ist wie die von der Feder erzeugte Federkraft, kann das Anschlagselement entfernt werden. Das erfolgt in Schritt b). Mindestens für die Dauer von Schritt b) ist die mit der Krafterzeugungseinrichtung auf den Federteller erzeugte Kraft mindestens so groß wie die von der Feder erzeugte Federkraft. Dadurch ist die Feder gesichert, so dass das Anschlagselement sicher entfernt werden kann.

Lag der Federteller vor Schritt a) an dem Anschlagselement zwischen dem Federteller und der ersten Stirnplatte an, wird der Federteller durch die mit der Krafterzeugungseinrichtung auf den Federteller erzeugte Kraft von dem Anschlagselement weg bewegt. Wird das Anschlagselement entfernt, wird die Feder nach wie vor durch den Federteller gehalten. Dadurch wird ein unkontrolliertes Entspannen der Feder vermieden.

Das Anschlagselement zu entfernen, ohne dass die mit der Krafterzeugungseinrichtung auf den Federteller erzeugte Kraft mindestens so groß ist wie die von der Feder erzeugte Federkraft, kann aufgrund von Kraftschluss schwierig oder unmöglich sein. Bei einem schlagartigen Entfernen des Anschlagselements könnte die Feder zudem schlagartig innerhalb des Gehäuses ganz oder teilweise entspannen. Auch dies stellt ein Gefahrenpotential dar.

Das beschriebene Verfahren kann insbesondere auf solche Rohrhalterungen angewendet werden, bei denen die Feder ohne das Anschlagselement innerhalb des Gehäuses entspannt vorliegt.

In Schritt c) wird die mit der Krafterzeugungseinrichtung auf den Federteller erzeugte Kraft auf einen Betrag unterhalb der von der Feder erzeugten Federkraft reduziert. Dadurch entspannt die Feder. Dies kann auf kontrollierte Weise und insoweit sicher erfolgen. Vorzugsweise dauert Schritt c) mindestens eine Sekunde, insbesondere mindestens fünf Sekunden. Damit ist quantifiziert, dass die mit der Krafterzeugungseinrichtung auf den Federteller erzeugte Kraft langsam reduziert wird, um die Feder kontrolliert zu entspannen.

In Schritt d) wird das Gehäuse geöffnet. Da die Feder durch Schritt c) entspannt worden ist, kommt es nicht darauf an, wie dies erfolgt. Beispielsweise können die erste Stirnplatte und/oder die zweite Stirnplatte von dem Mantel getrennt werden. Alternativ oder zusätzlich kann beispielsweise der Mantel geöffnet werden. Schritt d) wird nach Abschluss von Schritt c) durchgeführt.

In Schritt e) werden die Feder und der Federteller aus dem Gehäuse entnommen. Schritt e) wird nach Abschluss von Schritt d) durchgeführt.

In einer bevorzugten Ausführungsform wird in Schritt d) zumindest die zweite Stirnplatte von dem Mantel getrennt und ein an der zweiten Stirnplatte anliegender Teil der Feder von der übrigen Feder getrennt.

Vor Durchführung des Verfahrens liegt die Feder an der zweiten Stirnplatte an. Nachdem die Feder durch die Schritte a) bis c) entspannt worden ist, kann die Feder immer noch locker an der zweiten Stirnplatte anliegen. Wird das Gehäuse in dem Fall geöffnet, indem die zweite Stirnplatte vom Mantel getrennt wird, kann auch ein Teil der Feder vom übrigen Teil der Feder abgetrennt werden. Das wird in der vorliegenden Ausführungsform hingenommen, um das Gehäuse auf einfache Weise öffnen zu können. Dass auch die Feder durchtrennt wird, stellt keinen signifikanten Nachteil dar. Schließlich dient das Verfahren ohnehin der Demontage.

In einer weiteren bevorzugten Ausführungsform des Verfahrens ist zumindest während der Schritte a) bis c) an dem Federteller eine Stange befestigt, welche durch die erste Stirnplatte hindurch geführt ist, und wobei die Kraft in den Schritten a) bis c) über die Stange auf den Federteller ausgeübt wird.

Die Stange und die Feder sind in dieser Ausgestaltung auf unterschiedlichen Seiten des Federtellers angeordnet. Dadurch kann eine Druckkraft auf die Stange ausgeübt werden, um die Feder weiter zu stauchen. Die Krafterzeugungseinrichtung ist in dem Fall vorzugsweise als eine Drückeinrichtung ausgebildet. Diese muss nicht auch dazu geeignet sein, eine Zugkraft erzeugen zu können. Allerdings kann auch eine als eine Zug- und Drückeinrichtung ausgebildete Krafterzeugungseinrichtung verwendet werden.

Die Stange wird in Schritt e) vorzugsweise aus dem Gehäuse entnommen. Das gilt naturgemäß nur, soweit die Stange nicht bereits zuvor aus dem Gehäuse herausragte. Alternativ kann die Stange bereits vor Schritt d) entfernt werden, beispielsweise indem die Stange von dem Federteller getrennt wird. Das ist insbesondere dann bevorzugt, wenn das Gehäuse geöffnet werden soll, indem die erste Stirnplatte von dem Mantel getrennt wird.

In einer weiteren bevorzugten Ausführungsform des Verfahrens ist das Gehäuse der Rohrhalterung zumindest während der Schritte a) bis c) in einem Halter gehalten, wobei der Halter und die Krafterzeugungseinrichtung auf einem Werktisch fixiert sind.

Das Verfahren wird vorzugsweise mit einer Anordnung durchgeführt, welche zum Demontieren der Rohrhalterung eingerichtet ist. Der Werktisch ist Teil dieser Anordnung. Mit dem Werktisch können die Krafterzeugungseinrichtung und der Halter relativ zueinander fest gehalten werden. Dadurch ist es möglich, mit der Krafterzeugungseinrichtung die Feder zu stauchen. Sobald die Feder nach Schritt c) entspannt ist, muss das Gehäuse der Rohrhalterung nicht mehr in dem Halter gehalten sein. Aus praktischen Gründen kann das Gehäuse der Rohrhalterung aber auch während Schritt d) und/oder e) in dem Halter gehalten sein.

In einer weiteren bevorzugten Ausführungsform des Verfahrens wird das Gehäuse in Schritt b) mit einer an dem Werktisch befestigten Säge geöffnet.

Die Säge ist vorzugsweise eine Säbelsäge oder eine Kreissäge. Das Gehäuse kann mit der Säge insbesondere dadurch geöffnet werden, dass die zweite Stirnplatte von dem Mantel abgesägt wird.

In einer weiteren bevorzugten Ausführungsform des Verfahrens hat die Feder eine Federkonstante von mindestens 20 kN/m, bevorzugt von mindestens 200 kN/m, besonders bevorzugt von mindestens 2000 kN/m.

Das beschriebene Verfahren ist besonders dann sinnvoll, wenn die Feder so stark ist, dass diese ein erhebliches Sicherheitsrisiko darstellt. Je größer die von der Feder erzeugte Kraft, umso größer ist das damit verbundene Sicherheitsrisiko. Allerdings hängt die von der Feder erzeugte Kraft von der Auslenkung der Feder ab. Daher ist die von der Feder erzeugte Kraft für eine quantitative Definition einer "starken Feder" ungeeignet. Stattdessen wird auf die Federkonstante zurückgegriffen. Je größer die Federkonstante, umso stärker ist die Feder und umso sinnvoller ist die Anwendung des beschriebenen Verfahrens.

Alternativ oder zusätzlich zu der Federkonstante können auch weitere Eigenschaften der Feder dazu genutzt werden, den bevorzugten Anwendungsbereich des beschriebenen Verfahrens zu definieren. Die Feder hat vorzugsweise eine Masse von mehr als 1 kg, insbesondere von mehr als 10 kg. Die Feder hat vorzugsweise im entspannten Zustand einen Durchmesser von mindestens 2 cm, insbesondere von mindestens 10 cm.

Als ein weiterer Aspekt der Erfindung wird eine Anordnung zur Demontage einer Rohrhalterung, gemäß Patentanspruch 7, vorgestellt. Die Anordnung umfasst:
- einen Werktisch,
- eine Krafterzeugungseinrichtung,
- einen Halter für ein Gehäuse der Rohrhalterung,
- eine Säge,
wobei die Krafterzeugungseinrichtung, der Halter und die Säge an dem Werktisch befestigt sind, wobei die Krafterzeugungseinrichtung und der Halter auf einer Achse angeordnet sind, wobei die Krafterzeugungseinrichtung dazu eingerichtet ist, eine Kraft entlang der Achse zu erzeugen, und wobei die Achse eine Schnittebene der Säge kreuzt, und wobei der Halter zwischen der Krafterzeugungseinrichtung und der Schnittebene angeordnet ist.

Die beschriebenen Vorteile und Merkmale des Verfahrens sind auf die Anordnung anwendbar und übertragbar, und umgekehrt. Das Verfahren wird vorzugsweise mit der Anordnung durchgeführt. Die Anordnung ist vorzugsweise zur Durchführung des Verfahrens eingerichtet. Die Anordnung ist vorzugsweise dazu eingerichtet, eine wie beschrieben ausgestaltete Rohrhalterung zu demontieren. Eine solche Rohrhalterung weist ein Gehäuse auf, welches einen Mantel, eine an einer ersten Stirnseite des Gehäuses an dem Mantel befestigte erste Stirnplatte und eine an einer der ersten Stirnseite gegenüberliegenden zweiten Stirnseite des Gehäuses an dem Mantel befestigte zweite Stirnplatte umfasst, wobei innerhalb des Gehäuses eine Feder und ein axial beweglicher Federteller angeordnet sind, wobei die Feder einerseits an dem Federteller und andererseits an der zweiten Stirnplatte anliegt und dadurch derart gestaucht ist, dass die Feder eine Federkraft auf den Federteller in Richtung auf die erste Stirnplatte ausübt, wobei zwischen der ersten Stirnplatte und dem Federteller ein Anschlagselement angeordnet ist, welches die axiale Bewegung des Federtellers derart begrenzt, dass die Feder gestaucht ist, wenn der Federteller an dem Anschlagselement anliegt.

Die Krafterzeugungseinrichtung kann dazu genutzt werden, in den Schritten a) bis c) die Kraft auf den Federteller auszuüben. Dabei kann das Gehäuse der Rohrhalterung in dem Halter gehalten sein. Die Säge kann dazu genutzt werden, in Schritt d) das Gehäuse zu öffnen.

Die Krafterzeugungseinrichtung, der Halter und die Säge sind an dem Werktisch befestigt. Auf diese Weise ist es besonders einfach, die Rohrhalterung sicher zu halten und die Feder mit der Krafterzeugungseinrichtung zu stauchen. Die Krafterzeugungseinrichtung, der Halter und die Säge sind vorzugsweise jeweils auf der Oberfläche des Werktischs befestigt.

Die Krafterzeugungseinrichtung und der Halter sind auf einer Achse angeordnet. Die Krafterzeugungseinrichtung ist dazu eingerichtet, eine Kraft entlang der Achse zu erzeugen. Die Rohrhalterung wird vorzugsweise derart in den Halter eingelegt, dass die Achse der Feder der Rohrhalterung mit der hier beschriebenen Achse zusammenfällt. So kann die Krafterzeugungseinrichtung eine Kraft entgegen der von der Feder der Rohrhalterung erzeugten Federkraft erzeugen.

Die Achse kreuzt eine Schnittebene der Säge, vorzugsweise senkrecht. Die Säge kann also einen Schnitt setzen, welcher die hier beschriebene Achse kreuzt. Der Halter ist zwischen der Krafterzeugungseinrichtung und der Schnittebene angeordnet. Das Gehäuse kann also dort gehalten werden, wo die Säge ansetzt. Dadurch kann die zweite Stirnplatte mit der Säge von dem Mantel getrennt werden.

Die Anordnung kann insbesondere eine Anordnung zur Demontage einer Rohrhalterung sein, wobei die Rohrhalterung ein Gehäuse aufweist, welches einen Mantel, eine an einer ersten Stirnseite des Gehäuses an dem Mantel befestigte erste Stirnplatte und eine an einer der ersten Stirnseite gegenüberliegenden zweiten Stirnseite des Gehäuses an dem Mantel befestigte zweite Stirnplatte umfasst, wobei innerhalb des Gehäuses eine Feder und ein axial beweglicher Federteller angeordnet sind, wobei die Feder einerseits an dem Federteller und andererseits an der zweiten Stirnplatte anliegt und dadurch derart gestaucht ist, dass die Feder eine Federkraft auf den Federteller in Richtung auf die erste Stirnplatte ausübt, wobei zwischen der ersten Stirnplatte und dem Federteller ein Anschlagselement angeordnet ist, welches die axiale Bewegung des Federtellers derart begrenzt, dass die Feder gestaucht ist, wenn der Federteller an dem Anschlagselement anliegt, und wobei die Anordnung umfasst:
- einen Werktisch,
- eine Krafterzeugungseinrichtung zum Ausüben einer Kraft auf den Federteller, welche der von der Feder erzeugten Federkraft entgegenwirkt,
- einen Halter für ein Gehäuse der Rohrhalterung,
- eine Säge zum Öffnen des Gehäuses,
wobei die Krafterzeugungseinrichtung, der Halter und die Säge an dem Werktisch befestigt sind, wobei die Krafterzeugungseinrichtung und der Halter auf einer Achse angeordnet sind, wobei die Krafterzeugungseinrichtung dazu eingerichtet ist, eine Kraft entlang der Achse zu erzeugen, und wobei die Achse eine Schnittebene der Säge kreuzt, und wobei der Halter zwischen der Krafterzeugungseinrichtung und der Schnittebene angeordnet ist.

In einer bevorzugten Ausführungsform der Anordnung weist eine Oberfläche des Werktischs eine Vielzahl von Bohrungen auf, wobei der Halter und/oder die Krafterzeugungseinrichtung jeweils über mindestens ein Befestigungselement auf der Oberfläche des Werktischs fixiert sind, indem jedes der Befestigungselemente in mindestens einer der Bohrungen gesichert ist. Der "und"-Fall ist bevorzugt.

Die Bohrungen sind vorzugsweise regelmäßig angeordnet, beispielsweise in einem Gitternetz. Die Oberfläche des Werktischs kann insbesondere als ein Lochbrett ausgebildet sein. Auf diesem können der Halter und/oder die Krafterzeugungseinrichtung besonders einfach und flexibel auf der Oberfläche befestigt werden. Insbesondere können der Halter und die Krafterzeugungseinrichtung dadurch einfach relativ zueinander positioniert werden, um die Anordnung auf die Dimension einer bestimmten Rohrhalterung einzustellen. Das ist vorteilhaft, weil es Rohrhalterungen in verschiedenen Bauformen und Größen gibt.

Die Bohrungen können insbesondere als Sacklöcher oder als Durchgangslöcher ausgebildet sein. Die Befestigungselemente können insbesondere Schrauben oder Bolzen sein. Vorzugsweise greift jedes Befestigungselement jeweils in genau eine Bohrung ein. Denkbar ist aber beispielsweise auch eine Ausgestaltung, bei welcher ein Befestigungselement zwei oder mehr Schrauben oder Bolzen aufweist, welche jeweils in eine der Bohrungen eingreifen.

In einer weiteren bevorzugten Ausführungsform der Anordnung weist die Krafterzeugungseinrichtung einen Hydraulikzylinder auf, innerhalb dessen ein Kolben axial beweglich geführt ist.

Die Krafterzeugungseinrichtung ist dazu eingerichtet, linear eine Kraft zu erzeugen. In der vorliegenden Ausführungsform erfolgt dies hydraulisch. Die Krafterzeugungseinrichtung weist den Hydraulikzylinder auf, innerhalb dessen der Kolben axial beweglich geführt ist. Dies bezieht sich auf die Achse, entlang derer die Kraft erzeugt wird. Vorzugsweise weist der Hydraulikzylinder auf jeder Seite des Kolbens jeweils eine Hydraulikkammer auf. Durch Ein- und Ausleiten eines Hydraulikmediums in bzw. aus den Hydraulikkammern kann der Kolben linear verschoben werden, wodurch die Kraft erzeugt wird. Die Verwendung einer wie beschrieben ausgestalteten Krafterzeugungseinrichtung hat den Vorteil, dass damit eine ausreichend große Kraft erzeugt werden kann. Zudem kann diese Kraft auf kontrollierte Weise wieder reduziert werden. Dadurch kann die Feder kontrolliert entspannt werden.

Als ein weiterer Aspekt der Erfindung wird ein Verfahren, gemäß Patentanspruch 10, zum Rückbau oder zur Instandsetzung eines Kraftwerks vorgestellt. Das Kraftwerk weist eine Rohrleitung auf, welche über eine Rohrhalterung gehalten ist. Das Verfahren umfasst die folgenden Schritte:
A) Entfernen der Rohrhalterung von der Rohrleitung,
B) Demontieren der Rohrhalterung mit einem wie beschrieben ausgestalteten Verfahren zur Demontage einer Rohrhalterung.

Die beschriebenen Vorteile und Merkmale des Verfahrens zur Demontage einer Rohrhalterung und der Anordnung sind auf das Verfahren zum Rückbau oder zur Instandsetzung eines Kraftwerks anwendbar und übertragbar, und umgekehrt.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine seitliche Schnittdarstellung einer Rohrhalterung,
- Fig. 2:: eine Draufsicht auf eine erfindungsgemäße Anordnung zur Demontage einer Rohrhalterung, in welche die Rohrhalterung aus Fig. 1 eingesetzt ist, und
- Fig. 3:: eine seitliche Schnittdarstellung eines Teils eines Kraftwerks mit einer Rohrleitung, welche über die Rohrhalterung aus Fig. 1 gehalten ist.

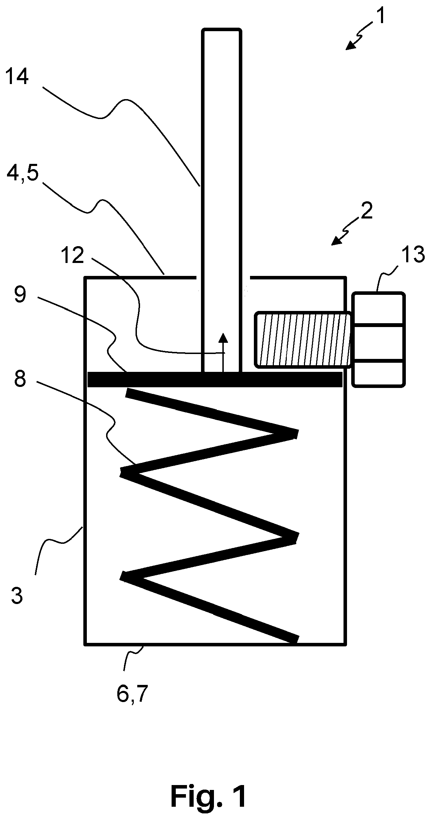

Fig. 1 zeigt eine als Federstütze ausgebildete Rohrhalterung 1. Die Rohrhalterung 1 weist ein Gehäuse 2 auf, welches einen Mantel 3 und zwei Stirnplatten 5, 7 aufweist. Eine erste der Stirnplatten 5 ist an einer ersten Stirnseite 4 des Gehäuses 2 an dem Mantel 3 befestigt. Eine zweite der Stirnplatten 7 ist an einer der ersten Stirnseite 4 gegenüberliegenden zweiten Stirnseite 6 des Gehäuses 2 an dem Mantel 3 befestigt. Innerhalb des Gehäuses 2 sind eine Feder 8 und ein axial nach oben und unten beweglicher Federteller 9 angeordnet. Die Feder 8 liegt einerseits an dem Federteller 9 und andererseits an der zweiten Stirnplatte 7 an und ist dadurch derart gestaucht, dass die Feder 8 eine Federkraft 12 auf den Federteller 9 in Richtung auf die erste Stirnplatte 5 (also hier nach oben) ausübt.

Zwischen der ersten Stirnplatte 5 und dem Federteller 9 ist ein hier als Schraube ausgebildetes Anschlagselement 13 angeordnet, welches die axiale Bewegung des Federtellers 9 derart begrenzt, dass die Feder 8 auch dann gestaucht ist, wenn der Federteller 9 wie in Fig. 1 gezeigt an dem Anschlagselement 13 anliegt. An dem Federteller 9 ist eine Stange 14 befestigt, welche durch die erste Stirnplatte 5 hindurch geführt ist.

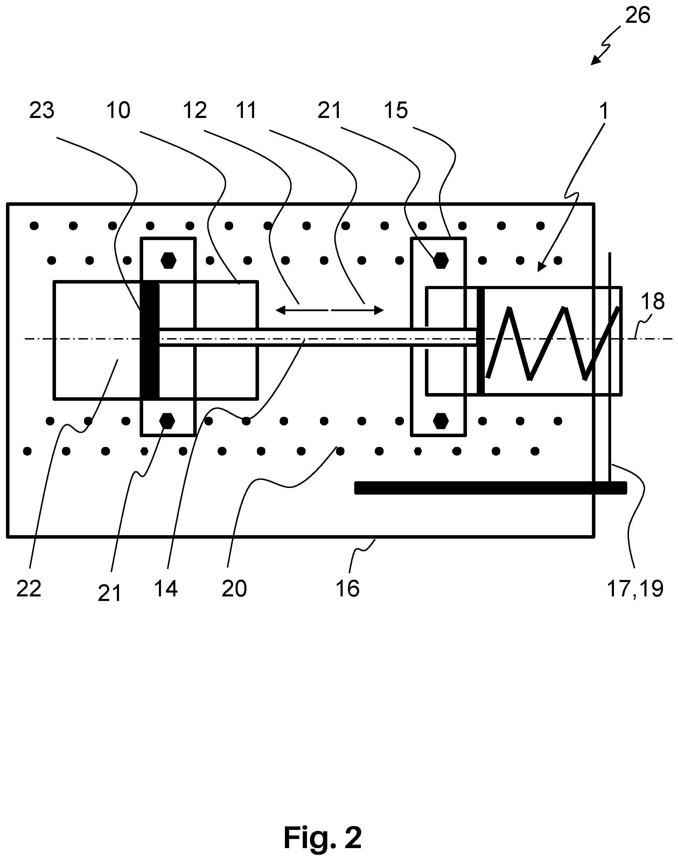

Fig. 2 zeigt eine Anordnung 26 zur Demontage einer Rohrhalterung 1. Die Anordnung 26 umfasst einen Werktisch 16. An einer Oberseite des Werktischs 16 sind eine Krafterzeugungseinrichtung 10, ein Halter 15 für die Rohrhalterung 1 und eine Säge 17 befestigt. In Fig. 2 ist ein Zustand gezeigt, in welchem die Rohrhalterung 1 aus Fig. 1 von dem Halter 15 aufgenommen ist. Die Rohrhalterung 1 ist nicht Teil der Anordnung 26.

Die Krafterzeugungseinrichtung 10 und der Halter 15 sind auf einer Achse 18 angeordnet. Die Krafterzeugungseinrichtung 10 ist dazu eingerichtet, eine Kraft 11 entlang der Achse 18 zu erzeugen. Die Achse 18 kreuzt eine Schnittebene 19 der Säge 17. Die Schnittebene 19 der Säge 17 steht senkrecht zur Zeichenebene. Der Halter 15 ist zwischen der Krafterzeugungseinrichtung 10 und der Schnittebene 19 angeordnet.

Die Oberfläche des Werktischs 16 weist eine Vielzahl von Bohrungen 20 auf. Der Halter 15 und die Krafterzeugungseinrichtung 10 sind jeweils über mehrere Befestigungselemente 21 auf der Oberfläche des Werktischs 16 fixiert, indem jedes der Befestigungselemente 21 in einer der Bohrungen 20 gesichert ist.

Die Krafterzeugungseinrichtung 10 weist einen Hydraulikzylinder 22 auf, innerhalb dessen ein Kolben 23 axial beweglich geführt ist. Beidseits des Kolbens 23 ist jeweils eine Hydraulikkammer innerhalb des Hydraulikzylinders 22 vorgesehen. Durch Ein- und Ausleiten eines Hydraulikmediums in bzw. aus den Hydraulikkammern kann der Kolben 23 nach rechts und links verschoben werden. Dadurch kann die Kraft 11 erzeugt werden, welche der von der Feder 8 der Rohrhalterung 1 erzeugten Federkraft 12 entgegenwirkt.

Mit der Anordnung 26 kann die Rohrhalterung 1 durch folgende Schritte demontiert werden:
a) mit der Krafterzeugungseinrichtung 10 Ausüben der Kraft 11 auf den Federteller 9, welche der von der Feder 8 erzeugten Federkraft 12 entgegenwirkt,
b) Entfernen des Anschlagselements 13, während die mit der Krafterzeugungseinrichtung 10 auf den Federteller 9 erzeugte Kraft 11 mindestens so groß ist wie die von der Feder 8 erzeugte Federkraft 12,
c) Reduzieren der mit der Krafterzeugungseinrichtung 10 auf den Federteller 9 erzeugten Kraft 11 auf einen Betrag unterhalb der von der Feder 8 erzeugten Federkraft 12,
d) Öffnen des Gehäuses 2, indem mit der Säge 17 die zweite Stirnplatte 7 von dem Mantel 3 getrennt wird, wobei ein an der zweiten Stirnplatte 7 anliegender Teil der Feder 8 von der übrigen Feder 8 getrennt wird, und
e) Entnehmen der Feder 8 und des Federtellers 9 aus dem Gehäuse 2.

In den Schritten a) bis c) wird die Kraft 11 über die Stange 14 auf den Federteller 9 ausgeübt.

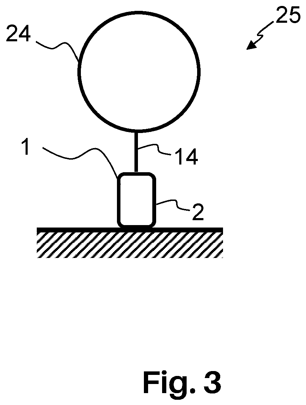

Fig. 3 zeigt einen Teil eines Kraftwerks 25 mit einer Rohrleitung 24, welche über die Rohrhalterung 1 aus Fig. 1 an einem Boden gehalten ist. Dabei ist die Stange 14 der Rohrhalterung 1 mit der Rohrleitung 24 verbunden. Das Gehäuse 2 ist an seiner Unterseite befestigt.
Das Kraftwerk 25 aus Fig. 3 kann einem Verfahren zum Rückbau oder zur Instandsetzung unterzogen werden, welches die folgenden Schritte umfasst:
A) Entfernen der Rohrhalterung 1 von der Rohrleitung 24,
B) Demontieren der Rohrhalterung 1 mit dem zu Fig. 2 beschriebenen Verfahren.

### Bezugszeichenliste

- 1: Rohrhalterung
- 2: Gehäuse
- 3: Mantel
- 4: erste Stirnseite
- 5: erste Stirnplatte
- 6: zweite Stirnseite
- 7: zweite Stirnplatte
- 8: Feder
- 9: Federteller
- 10: Krafterzeugungseinrichtung
- 11: Kraft
- 12: Federkraft
- 13: Anschlagselement
- 14: Stange
- 15: Halter
- 16: Werktisch
- 17: Säge
- 18: Achse
- 19: Schnittebene
- 20: Bohrung
- 21: Befestigungselement
- 22: Hydraulikzylinder
- 23: Kolben
- 24: Rohrleitung
- 25: Kraftwerk
- 26: Anordnung

## Patentansprüche

1. Verfahren zur Demontage einer Rohrhalterung (1), wobei die Rohrhalterung (1) ein Gehäuse (2) aufweist, welches einen Mantel (3) und eine an einer ersten Stirnseite (4) des Gehäuses (2) an dem Mantel (3) befestigte erste Stirnplatte (5) umfasst,
**dadurch gekennzeichnet, dass**
die Rohrhalterung (1) eine an einer der ersten Stirnseite (4) gegenüberliegenden zweiten Stirnseite (6) des Gehäuses (2) an dem Mantel (3) befestigte zweite Stirnplatte (7) umfasst, wobei innerhalb des Gehäuses (2) eine Feder (8) und ein axial beweglicher Federteller (9) angeordnet sind, wobei die Feder (8) einerseits an dem Federteller (9) und andererseits an der zweiten Stirnplatte (7) anliegt und dadurch derart gestaucht ist, dass die Feder (8) eine Federkraft (12) auf den Federteller (9) in Richtung auf die erste Stirnplatte (5) ausübt, wobei zwischen der ersten Stirnplatte (5) und dem Federteller (9) ein Anschlagselement (13) angeordnet ist, welches die axiale Bewegung des Federtellers (9) derart begrenzt, dass die Feder (8) gestaucht ist, wenn der Federteller (9) an dem Anschlagselement (13) anliegt, und wobei das Verfahren die folgenden Schritte umfasst:
a) mit einer Krafterzeugungseinrichtung (10) Ausüben einer Kraft (11) auf den Federteller (9), welche der von der Feder (8) erzeugten Federkraft (12) entgegenwirkt,
b) Entfernen des Anschlagselements (13), während die mit der Krafterzeugungseinrichtung (10) auf den Federteller (9) erzeugte Kraft (11) mindestens so groß ist wie die von der Feder (8) erzeugte Federkraft (12),
c) Reduzieren der mit der Krafterzeugungseinrichtung (10) auf den Federteller (9) erzeugten Kraft (11) auf einen Betrag unterhalb der von der Feder (8) erzeugten Federkraft (12),
d) Öffnen des Gehäuses (2), und
e) Entnehmen der Feder (8) und des Federtellers (9) aus dem Gehäuse (2).

2. Verfahren nach Anspruch 1, wobei in Schritt d) zumindest die zweite Stirnplatte (7) von dem Mantel (3) getrennt wird und ein an der zweiten Stirnplatte (7) anliegender Teil der Feder (8) von der übrigen Feder (8) getrennt wird.

3. Verfahren nach einem der vorstehenden Ansprüche, wobei zumindest während der Schritte a) bis c) an dem Federteller (9) eine Stange (14) befestigt ist, welche durch die erste Stirnplatte (5) hindurch geführt ist, und wobei die Kraft (11) in den Schritten a) bis c) über die Stange (14) auf den Federteller (9) ausgeübt wird.

4. Verfahren nach einem der vorstehenden Ansprüche, wobei das Gehäuse (2) der Rohrhalterung (1) zumindest während der Schritte a) bis c) in einem Halter (15) gehalten ist, und wobei der Halter (15) und die Krafterzeugungseinrichtung (10) auf einem Werktisch (16) fixiert sind.

5. Verfahren nach einem der vorstehenden Ansprüche, wobei das Gehäuse (2) in Schritt d) mit einer an dem Werktisch (16) befestigten Säge (17) geöffnet wird.

6. Verfahren nach einem der vorstehenden Ansprüche, wobei die von der Feder (8) eine Federkonstante von mindestens 20 kN/m hat.

7. Anordnung (26) zur Demontage einer Rohrhalterung (1), umfassend:
- einen Werktisch (16),
- eine Krafterzeugungseinrichtung (10) und
- einen Halter (15) für ein Gehäuse (2) der Rohrhalterung (1),
**dadurch gekennzeichnet, dass** die Anordnung eine Säge (17) umfasst,
wobei die Krafterzeugungseinrichtung (10), der Halter (15) und die Säge (17) an dem Werktisch (16) befestigt sind, wobei die Krafterzeugungseinrichtung (10) und der Halter (15) auf einer Achse (18) angeordnet sind, wobei die Krafterzeugungseinrichtung (10) dazu eingerichtet ist, eine Kraft (11) entlang der Achse (18) zu erzeugen, und wobei die Achse (18) eine Schnittebene (19) der Säge (17) kreuzt, und wobei der Halter (15) zwischen der Krafterzeugungseinrichtung (10) und der Schnittebene (19) angeordnet ist.

8. Anordnung (26) nach Anspruch 7, wobei eine Oberfläche des Werktischs (16) eine Vielzahl von Bohrungen (20) aufweist, und wobei der Halter (15) und/oder die Krafterzeugungseinrichtung (10) jeweils über mindestens ein Befestigungselement (21) auf der Oberfläche des Werktischs (16) fixiert sind, indem jedes der Befestigungselemente (21) in mindestens einer der Bohrungen (20) gesichert ist.

9. Anordnung (26) nach einem der Ansprüche 7 oder 8, wobei die Krafterzeugungseinrichtung (10) einen Hydraulikzylinder (22) aufweist, innerhalb dessen ein Kolben (23) axial beweglich geführt ist.

10. Verfahren zum Rückbau oder zur Instandsetzung eines Kraftwerks (25), welches eine Rohrleitung (24) aufweist, welche über eine Rohrhalterung (1) gehalten ist, wobei das Verfahren die folgenden Schritte umfasst:
A) Entfernen der Rohrhalterung (1) von der Rohrleitung (24),
B) Demontieren der Rohrhalterung (1) mit einem Verfahren gemäß einem der Ansprüche 1 bis 6.

## Claims

1. Method for disassembling a pipe mount (1), wherein the pipe mount (1) has a housing (2) which comprises a shell (3) and a first end plate (5) fastened to the shell (3) on a first end side (4) of the housing (2), **characterized in that** the pipe mount (1) comprises a second end plate (7) attached to the shell (3) on a second side (6) of the housing (2) lying opposite the first end side (4), wherein a spring (8) and an axially movable spring collar (9) are arranged within the housing (2), wherein the spring (8) bears firstly against the spring collar (9) and secondly against the second end plate (7) and is compressed as a result in such a way that the spring (8) exerts a spring force (12) on the spring collar (9) in the direction of the first end plate (5), wherein a stop element (13) is arranged between the first end plate (5) and the spring collar (9), which limits the axial movement of the spring collar (9) in such a way that the spring (8) is compressed when the spring collar (9) bears against the stop element (13), and wherein the method comprises the following steps:
a) exerting a force (11) on the spring collar (9) by way of a force-generating device (10), which force counteracts the spring force (12) generated by the spring (8),
b) removing the stop element (13) while the force (11) generated by the force-generating device (10) on the spring collar (9) is at least as great as the spring force (12) generated by the spring (8),
c) reducing the force (11) generated by the force-generating device (10) on the spring collar (9) to an amount below the spring force (12) generated by the spring (8),
d) opening the housing (2), and
e) removing the spring (8) and the spring collar (9) from the housing (2).

2. Method according to Claim 1, wherein, in step d), at least the second end plate (7) is separated from the shell (3) and a part of the spring (8) which bears against the second end plate (7) is separated from the remaining spring (8).

3. Method according to one of the preceding claims, wherein, at least during steps a) to c), a rod (14) is fastened to the spring collar (9), which rod is guided through the first end plate (5), and wherein the force (11) is exerted on the spring collar (9) via the rod (14) in steps a) to c).

4. Method according to one of the preceding claims, wherein the housing (2) of the pipe mount (1) is held in a holder (15) at least during steps a) to c), and wherein the holder (15) and the force-generating device (10) are fixed on a worktable (16).

5. Method according to one of the preceding claims, wherein, in step d), the housing (2) is opened with a saw (17) fastened to the worktable (16).

6. Method according to one of the preceding claims, wherein the of the spring (8) has a spring constant of at least 20 kN/m.

7. Arrangement (26) for disassembling a pipe mount (1), comprising:
- a worktable (16),
- a force-generating device (10), and
- a holder (15) for a housing (2) of the pipe mount (1), **characterized in that** the arrangement comprises a saw (17),
wherein the force-generating device (10), the holder (15) and the saw (17) are fastened to the worktable (16), wherein the force-generating device (10) and the holder (15) are arranged on an axis (18), wherein the power generating device (10) is set up to generate a force (11) along the axis (18), and wherein the axis (18) crosses a cutting plane (19) of the saw (17), and wherein the holder (15) is arranged between the force-generating device (10) and the cutting plane (19).

8. Arrangement (26) according to Claim 7, wherein a surface of the worktable (16) has a plurality of bores (20), and wherein the holder (15) and/or the force-generating device (10) are/is each fixed via at least one fastening element (21) on the surface of the worktable (16), by each of the fastening elements (21) being secured in at least one of the bores (20).

9. Arrangement (26) according to either of Claims 7 or 8, wherein the force-generating device (10) has a hydraulic cylinder (22), within which a piston (23) is guided axially movably.

10. Method for dismantling or repairing a power plant (25) which has a pipeline (24) which is held by a pipe mount (1), wherein the method comprises the following steps:
a) removing the pipe mount (1) from the pipeline (24),
b) dismantling the pipe mount (1) by means of a method according to one of Claims 1 to 6.

## Revendications

1. Procédé de démontage d'un support de tuyau (1), le support de tuyau (1) comprenant un boîtier (2) qui comprend une enveloppe (3) et une première plaque d'extrémité (5) fixée à l'enveloppe (3) sur un premier côté d'extrémité (4) du boîtier (2), **caractérisé en ce que** le support de tuyau (1) comprend une deuxième plaque d'extrémité (7) fixée à l'enveloppe (3) sur un deuxième côté d'extrémité (6) du boîtier (2) opposé au premier côté d'extrémité (4), un ressort (8) et une plaque (9) de ressort mobile axialement étant agencés à l'intérieur du boîtier (2), le ressort (8) étant en appui d'une part sur la plaque (9) de ressort et d'autre part sur la deuxième plaque frontale (7) et étant ainsi comprimé de telle sorte que le ressort (8) exerce une force élastique (12) sur la plaque (9) de ressort en direction de la première plaque frontale (5), un élément de butée (13) étant agencé entre la première plaque frontale (5) et la plaque (9) de ressort, lequel limite le mouvement axial de la plaque (9) de ressort de telle sorte que le ressort (8) est comprimé lorsque la plaque (9) de ressort est en contact avec l'élément de butée (13), le procédé comprenant les étapes suivantes :
a) exercer, au moyen d'un dispositif (10) de génération de force, une force (11) sur la plaque (9) de ressort qui s'oppose à la force de ressort (12) générée par le ressort (8),
b) retirer l'élément de butée (13) tant que la force (11) générée par le dispositif (10) de génération de force sur la plaque (9) de ressort est au moins aussi importante que la force élastique (12) générée par le ressort (8),
c) réduire la force (11) générée par le dispositif (10) de génération de force sur la plaque (9) de ressort à une valeur inférieure à la force de ressort (12) générée par le ressort (8),
d) ouvrir le boîtier (2), et
e) retirer le ressort (8) et la plaque (9) de ressort hors du boîtier (2).

2. Procédé selon la revendication 1, dans lequel, à l'étape d), au moins la deuxième plaque d'extrémité (7) est séparée de l'enveloppe (3) et une partie du ressort (8) adjacente à la deuxième plaque d'extrémité (7) est séparée du reste du ressort (8).

3. Procédé selon l'une des revendications précédentes, dans lequel, au moins pendant les étapes a) à c), une tige (14) est fixée à la plaque (9) de ressort, laquelle est guidée à travers la première plaque frontale (5), et dans lequel la force (11) est exercée sur la plaque (9) de ressort par la tige (14) pendant les étapes a) à c).

4. Procédé selon l'une des revendications précédentes, dans lequel le boîtier (2) du support de tuyau (1) est maintenu dans un support (15) au moins pendant les étapes a) à c), et dans lequel le support (15) et le dispositif (10) de génération de force sont fixés sur une table de travail (16).

5. Procédé selon l'une des revendications précédentes, dans lequel le boîtier (2) est ouvert à l'étape d) au moyen d'une scie (17) fixée à la table de travail (16).

6. Procédé selon l'une des revendications précédentes, dans lequel le du ressort (8) a une constante de rappel d'au moins 20kN/m.

7. Agencement (26) pour le démontage d'un support de tuyau (1), comprenant :
- une table de travail (16),
- un dispositif (10) de génération de force, et
- un support (15) pour un boîtier (2) du support de tuyau (1), **caractérisé en ce que** l'agencement comprend une scie (17),
le dispositif (10) de génération de force, le support (15) et la scie (17) étant fixés à la table de travail (16), le dispositif (10) de génération de force et le support (15) étant agencés sur un axe (18), le dispositif (10) de génération de force étant conçu pour générer une force (11) le long de l'axe (18), et l'axe (18) croisant un plan de coupe (19) de la scie (17), et le support (15) étant agencé entre le dispositif (10) de génération de force et le plan de coupe (19).

8. Agencement (26) selon la revendication 7, dans lequel une surface de la table de travail (16) comprend une pluralité d'alésages (20), et dans lequel le support (15) et/ou le dispositif (10) de génération de force sont fixés chacun sur la surface de la table de travail (16) par au moins un élément de fixation (21), chacun des éléments de fixation (21) étant fixé dans au moins un des alésages (20).

9. Agencement (26) selon l'une des revendications 7 ou 8, le dispositif (10) de génération de force comprenant un vérin hydraulique (22) à l'intérieur duquel un piston (23) est guidé de manière mobile axialement.

10. Procédé de démantèlement ou de remise en état d'une installation (25) qui comprend un tuyau (24) maintenu par un support de tuyau (1), le procédé comprenant les étapes suivantes :
A) retrait du support de tuyau (1) par rapport au tuyau (24),
B) démontage du support de tuyau (1) par un procédé selon l'une des revendications 1 à 6.
